# EUROPÄISCHE PATENTSCHRIFT

(11) **EP 2 467 318 B1**
(45) Veröffentlichungstag und Bekanntmachung des Hinweises auf die Patenterteilung: **05.11.2014**
(21) Anmeldenummer: 10745218.7
(22) Anmeldetag: 17.08.2010
(51) Int. Cl.: B65G 1/04, B65G 1/137

(54) **LAGERSYSTEM**
STORAGE SYSTEM
SYSTÈME D'ENTREPOSAGE

(30) Priorität: 17.08.2009 AT 12932009
(43) Veröffentlichungstag der Anmeldung: 27.06.2012
(73) Patentinhaber: Knapp AG, 8075 Hart bei Graz (AT)
(72) Erfinder: KOHOLKA, Roland, A-8502 Lannach (AT)
(74) Vertreter: Margotti, Herwig Franz
(86) Internationale Anmeldenummer: PCT/EP2010/061990
(87) Internationale Veröffentlichungsnummer: WO 2011/020836

(56) Entgegenhaltungen:
- EP-A1- 0 678 461
- EP-A1- 1 462 393
- EP-A2- 1 262 430
- WO-A1-01/27002
- WO-A2-2008/015114
- DE-A1-102008 007 826
- DE-U1- 9 315 118
- DE-U1- 20 112 328
- DE-U1-202008 010 879
- DE-U1-202009 012 490

## Beschreibung

In vielen Logistiksystemen, beispielsweise im Lebensmittel- und Textilhandel, stellt sich oft die Forderung der Zwischenlagerung von Produkten mit unterschiedlichsten Maßen, Formen und Festigkeiten für einen nachfolgenden Kommissioniervorgang oder für das direkte Versenden.

Zur Einsparung von Zeit und Kosten werden an Logistiksysteme immer höhere Anforderungen an den Automatisierungsgrad gestellt. Es ist bekannt, "schnell drehende" Produkte, das sind Produkte, die in großer Zahl und gleicher Form vorliegen, in einem Hochregallager zu lagern und für den Ein- und Auslagervorgang automatisierte und rechnergesteuerte Regalfahrzeuge zu verwenden. Für die Leistungsfähigkeit des Gesamtsystems ist entscheidend, dass der Kommissioniervorgang, bei dem die Waren für einen Auslieferungsauftrag zusammengestellt werden, rasch und mit hohem Automatisierungsgrad erfolgen kann, oder dass direkt zu versendende Produkte unter hohem Automatisierungsgrad rasch in eine Versandstelle gelangen. Bei der Automatisierung der Lagerung und Kommissionierung bzw. Versendung von Produkten mit unterschiedlichsten Maßen, Formen und Festigkeiten stößt man jedoch gerade aufgrund der Vielfalt dieser Produkte und ihrer unterschiedlichen Handhabung auf große Schwierigkeiten. Zur Lösung dieser Probleme wurden schon automatische Kleinteilelager entwickelt. Dabei bezieht sich der Begriff "Klein"-Teilelager nicht auf die Größe der Produkte an sich, sondern auf deren Menge und Durchsatz. Beispielsweise handelt es sich bei solchen Produkten um Einheiten, die für das Lagern und Kommissionieren als nicht weiter teilbare Packeinheiten angesehen werden, die sehr wohl aber aus mehreren Einzelteilen bestehen können, z.B. Mehrfachpackungen von PET-Flaschen, die gemeinsam mit einer Schrumpffolie umhüllt sind. Um diese Produkteinheiten im Kleinteilelager lagern zu können, werden meist Ladehilfsmittel, sogenannte Trays, verwendet.

Ein Beispiel für ein solches automatisches Kleinteilelager ist aus der Schrift EP 1 698 573 B1 bekannt, die ein automatisiertes System zum Lagern und Kommissionieren von Produkten offenbart. Dieses System umfasst ein Tablarlager, in dem Produkte auf Trays (Tablaren) gelagert werden, nachdem sie zuvor von Paletten etc. entnommen, vereinzelt und auf diese Trays gestellt worden waren. Zur Kommissionierung werden die Trays mit den darauf befindlichen Produkten zu Kommissionierarbeitsplätzen gebracht. Die Entnahme der Produkte vom Tray an diesen Arbeitsplätzen kann automatisch oder manuell erfolgen.

Die Verwendung von Trays hat jedoch den Nachteil, dass nach der Entnahme der Produkte die leeren Trays mittels Rückförderer in ein Tray-Lager befördert und dort solange gelagert werden müssen, bis sie wieder zur Aufnahme neuer Produkte gebraucht werden. Die Lagerung der Trays kann zwar direkt im automatischen Kleinteilelager erfolgen, dies belastet jedoch das System und reduziert die nutzbare Leistung, nämlich die Ein- und Auslagerung von Trays mit darauf befindlichen Produkten. Diese Leistungsreduktion ist bei einem automatischen Kleinteilelager besonders nachteilig, da in vielen Fällen die Auslagerleistung des automatischen Kleinteilelagers jener Faktor ist, welcher den Durchsatz des Gesamtsystems limitiert.

Eine Möglichkeit, die leeren Trays zu lagern, ohne das automatische Kleinteilelager zu belasten, ist das Lagern der Trays außerhalb des Lagers. Hierbei entstehen jedoch zusätzliche Kosten durch die Schaffung notwendiger Fördertechnik, Stapelungs- und Entstapelungsvorrichtungen. Ein weiterer Nachteil eines solchen Systems sind die Kosten, welche pro Tray anfallen.

Im Hinblick auf die obigen Nachteile des Standes der Technik gab es auch schon Ansätze, die Produkte ohne Trays in automatischen Kleinteilelagern zu lagern. Dazu werden Regalbediengeräte mit komplexen Lastaufnahmemitteln verwendet. Regalbediengeräte sind aber für viele Anwendungen im Kommissionierbereich und zum direkten Versenden zu langsam. Darüber hinaus ist die Entwicklung von Lastaufnahmemitteln, die für unterschiedlichste Produkte geeignet sind, sehr schwierig.

WO 01/27002 A1 beschreibt den nächstliegenden Stand der Technik, wobei hier nur ein Bediengerät eingesetzt wird.

Es ist daher eine Aufgabe der vorliegenden Erfindung, das Einlagern von unterschiedlichsten, förderbaren Produkten in ein automatisches Kleinteilelager und das Auslagern der Produkte aus dem automatischen Kleinteilelager heraus ohne die Verwendung von Trays oder Regalbediengeräten mit komplexen Lastaufnahmemitteln zu ermöglichen und dabei hohe Verarbeitungsgeschwindigkeit zu erreichen.

Diese Aufgabe wird durch ein Lagersystem mit den Merkmalen des Anspruchs 1 sowie durch ein Verfahren zum Einlagern und Auslagern von Produkten in ein bzw. aus einem Lagersystem mit den Merkmalen des Anspruchs 14 gelöst. Vorteilhafte Ausgestaltungen der Erfindung sind in den Unteransprüchen dargelegt.

Im Folgenden werden Ausführungsformen der Erfindung in nicht einschränkender Weise unter Bezugnahme auf die Zeichnungen näher erläutert.
Figur 1 zeigt ein Lagersystem mit fünf Ebenen in einer Schrägansicht.
Figur 2 zeigt das Lagersystem gemäß Figur 1 in einer Draufsicht.
Figur 3 zeigt das Lagersystem gemäß Figur 1 in einer Seitenansicht.
Figur 4 zeigt die erste Ebene des Lagersystems gemäß Figur 1 in einer Schrägansicht.
In den Figuren 5-A bis 5-R ist ein Lagersystem gemäß einem weiteren Ausführungsbeispiel der Erfindung in einer schematischen Draufsicht dargestellt, wobei die einzelnen Verfahrensschritte zum Einlagern und zum Auslagern eines Produktes ersichtlich sind.
Figur 6 zeigt einen Fachboden des Lagersystems gemäß Figur 1.
Figur 7 zeigt einen Fachboden samt Transportrollen gemäß eines weiteren Ausführungsbeispiels in einer Draufsicht.
Figur 8 zeigt den Fachboden samt Transportrollen gemäß Figur 7 in einer Schnittdarstellung.

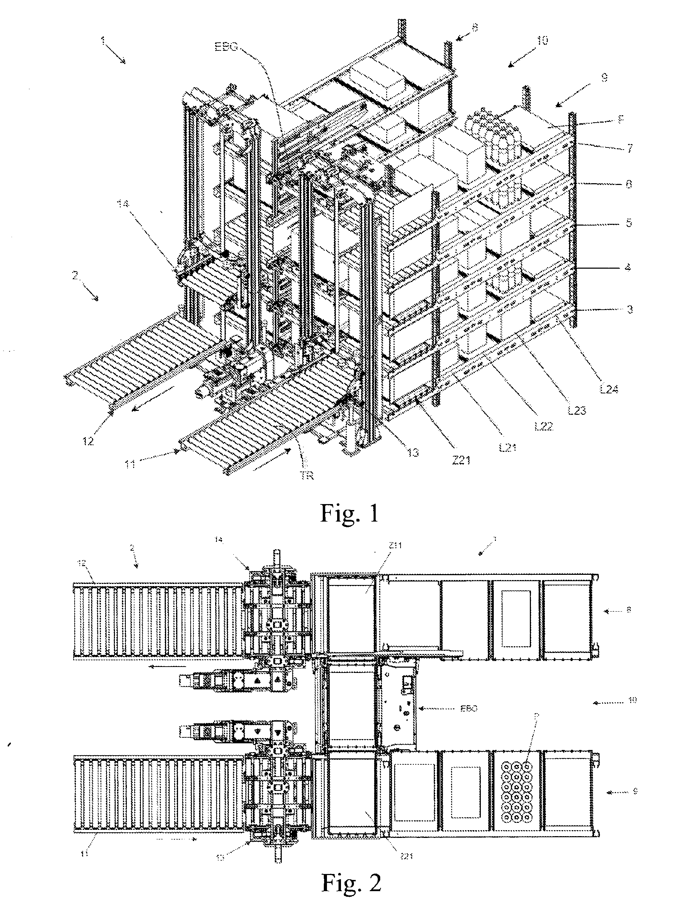

In den Figuren 1 bis 3 ist ein Lagersystem 1 dargestellt, in dem Produkte P zwischengelagert werden können. Die Produkte P werden mit Lastkraftwagen oder per Bahn angeliefert und von dort in ein in den Figuren nicht dargestelltes Palettenlager ausgeladen. Auf einer Palette kann eine große Anzahl einer Sorte der Produkte P lagern, wobei eine nicht weiter teilbare Packeinheit im Folgenden als ein Produkte P bezeichnet wird. So könnten beispielsweise sechs zusammen in Folie verpackte PET Plastikflaschen ein Produkt P bilden.

Die Produkte P werden von den Paletten abgeladen und hierbei vereinzelt und über eine teilweise in den Figuren dargestellte Fördertechnik 2 zum Lagersystem 1 befördert. In dem Lagersystem 1 werden die Produkte P zwischengelagert und über die Fördertechnik 2 an eine Kommissionierungseinheit abgegeben, wenn eine bestimmte Anzahl verschiedener Produkte P an einen Kunden geliefert werden sollen. Dieses Zusammenstellen der verschiedenen Produkte P nach Anzahl und Art auf eine oder mehrere Paletten für die Auslieferung per Lastkraftwagen oder Bahn wird als Kommissionieren der Produkte P bezeichnet. Ein in den Figuren nicht dargestellter Systemrechner ist für die gesamte Steuerung der Fördertechnik 2 und auch des Lagersystems 1 vorgesehen.

Das in den Figuren 1 bis 3 dargestellte Lagersystem 1 weist fünf Regalebenen 3, 4, 5, 6 und 7 eines ersten Regals 8 und einen zweiten Regals 9 auf. Die beiden Regale 8 und 9 haben je Regalebene 3, 4, 5, 6 oder 7 vier Lagerplätze L, wobei beispielhaft die Lagerplätze L21, L22, L23 und L24 des zweiten Regals 9 in der ersten Regalebene 3 in Figur 1 bezeichnet sind. Auf jedem der Lagerplätze L befindet sich ein Fachboden F für den Transport der Produkte P, worauf nachfolgend noch näher eingegangen ist.

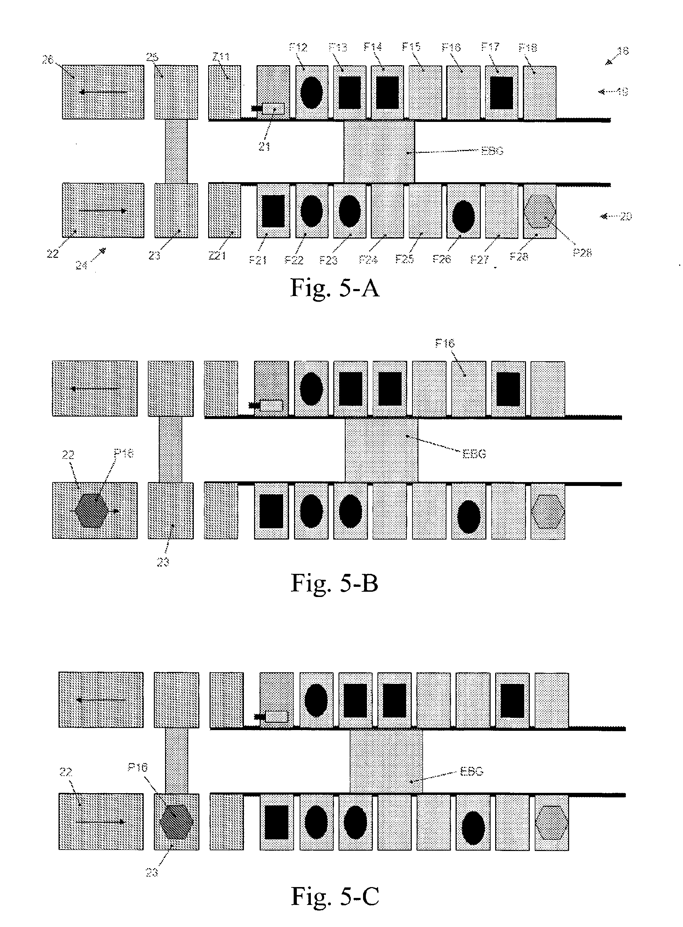

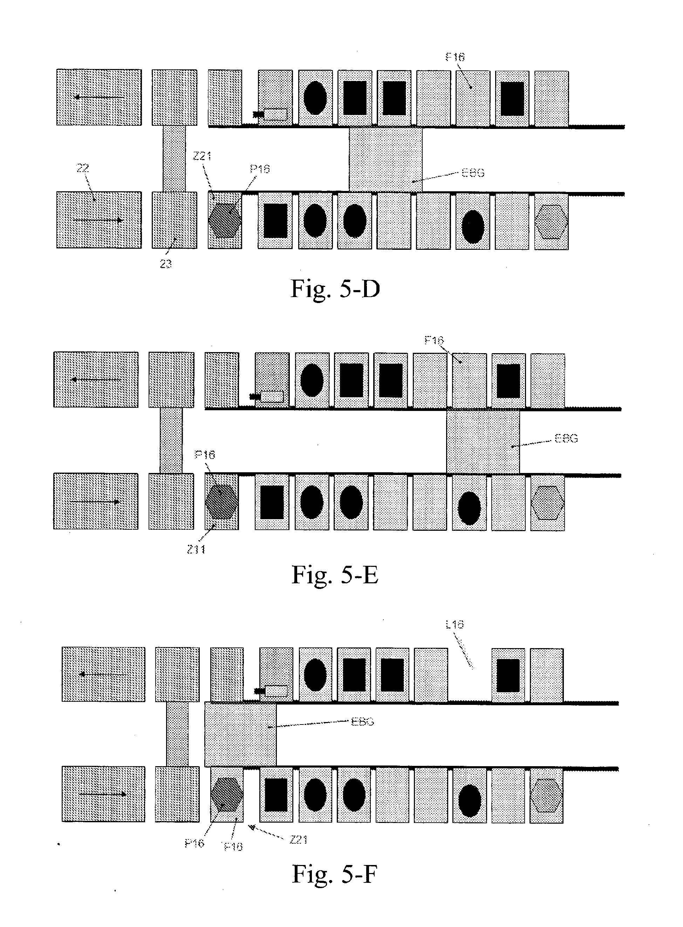

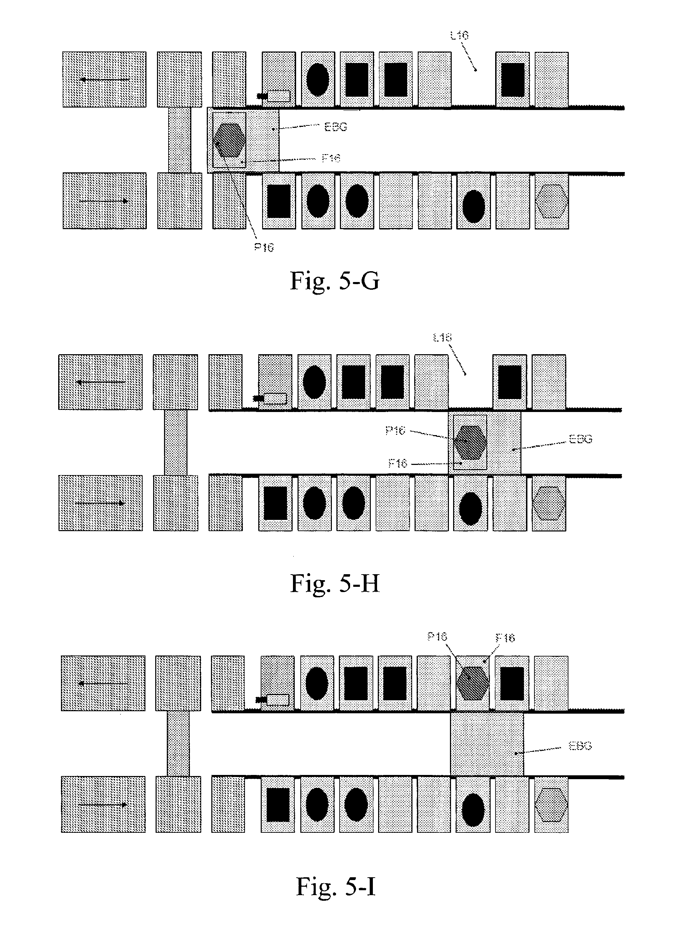

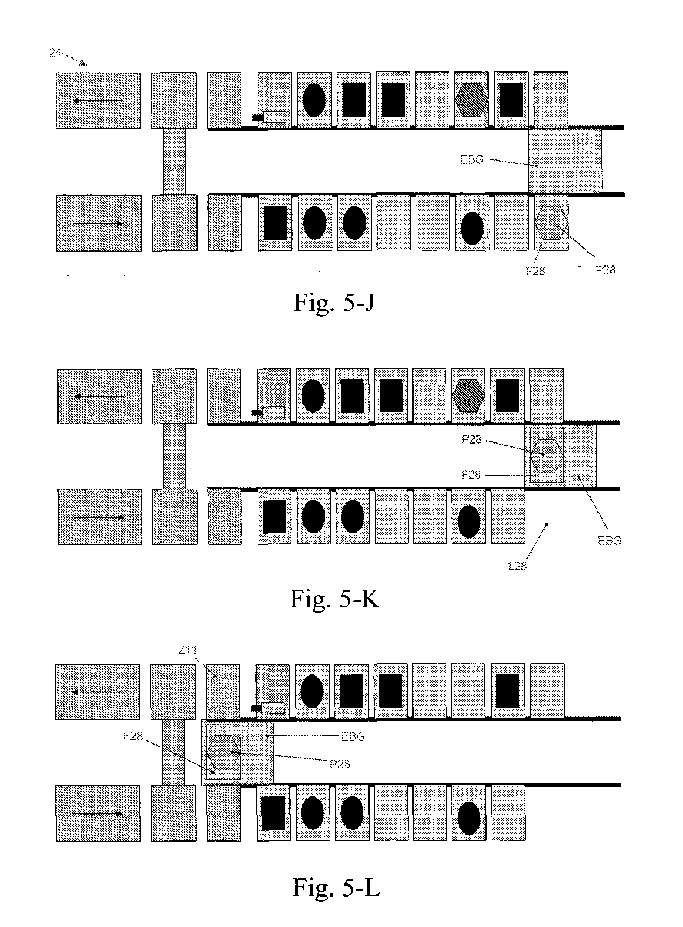

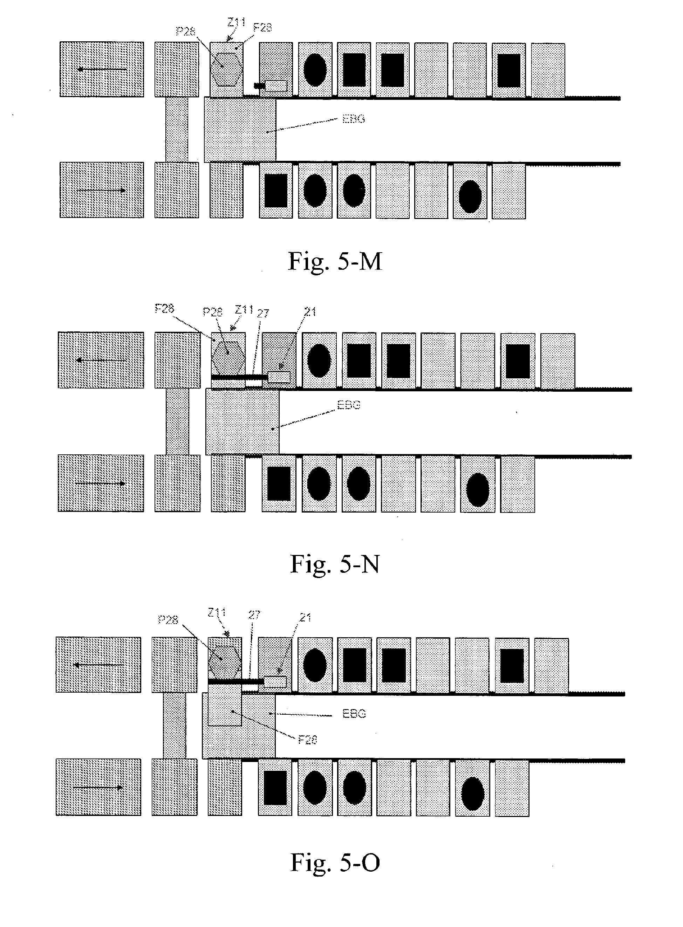

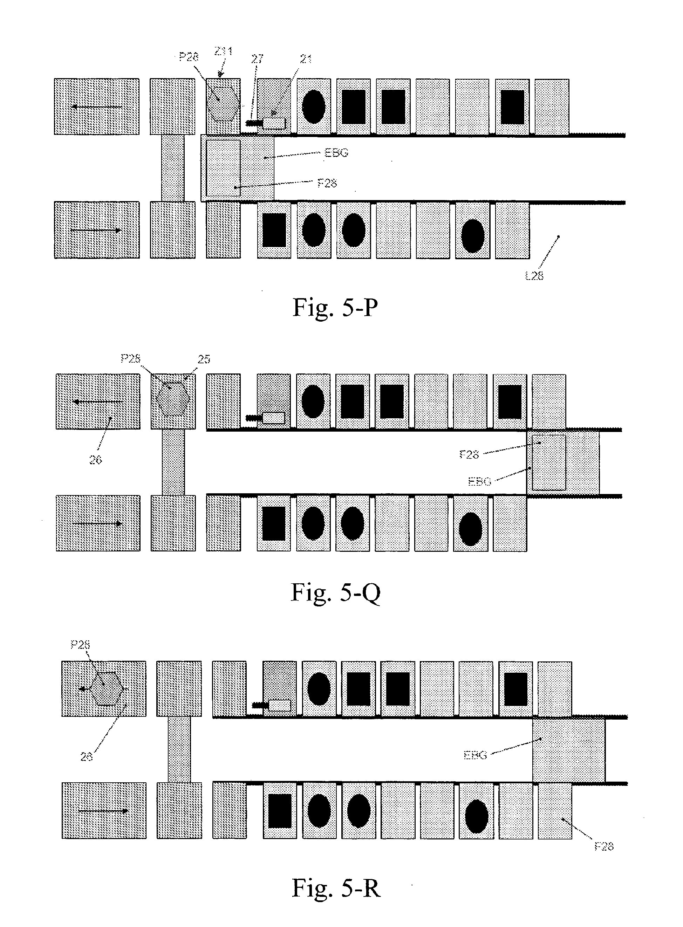

Zwischen dem ersten Regal 8 und dem zweiten Regal 9 befindet sich eine Fahrgasse 10 in der ein Ebenenbediengerät EBG je Ebene zum Anfahren der Lagerplätze L in den verschiedenen Ebenen vorgesehen ist, worauf anhand der Figur 5 noch näher eingegangen wird. Die Produkte P werden von dem Palettenlager über eine Importstrecke 11 der Fördertechnik 2 zu dem Lagersystem 1 befördert und über eine Exportstrecke 12 der Fördertechnik 2 von dem Lagersystem 1 zu der Kommissionierungseinheit befördert. Zum leichteren Transport laufen die Produkte P über Transportrollen TR der Importstrecke 11 und Exportstrecke 12. Das Lagersystem 1 weist einen ersten Lift 13 und einen zweiten Lift 14 auf. Der erste Lift 13 ist zum Aufnehmen von über die Importstrecke 11 angelieferten Produkten P und zum Zuführen beziehungsweise Anheben der Produkte P auf die vom Systemrechner vorgegebene Regalebene und zum Abgeben der Produkte P in einen in jedem Regal 8 und 9 in jeder Regalebene vorgesehenen Zwischenpuffer Z ausgebildet. Die Zwischenpuffer Z sind zum kurzfristigen Zwischenlagern der von dem ersten Lift 13 abgegebenen Produkten P bis zur Einlagerung in einem Lagerplatz L und zum Zwischenspeichern von aus Lagerplätzen L ausgelagerten Produkten P bis zur Übergabe an den zweiten Lift 14 ausgebildet. In Figur 1 ist beispielhaft der Zwischenpuffer Z21 des zweiten Regals 9 in der ersten Regalebene 1 bezeichnet. Da über die Importstrecke 11 die Produkte P zu dem Lagersystem 1 angeliefert werden sind die Zwischenpuffer Z21 bis Z25 der fünf Regalebenen 3 bis 7 des zweiten Regals 9 zum Zwischenspeichern beim Einlagern vorgesehen. Da weiters die Exportstrecke 12 die Produkte P von dem Lagersystem 1 ausliefert sind die Zwischenpuffer Z11 bis Z15 der Regalebenen 3 bis 7 des ersten Regals 8 zum Zwischenspeichern beim Auslagern vorgesehen. Durch diese klare Zuordnung der Zwischenspeicher Z ist der Vorteil eines hohen Durchsatzes des Lagersystems 1 erhalten.

Bei dem Lagersystem 1 ist nunmehr vorgesehen, dass jeder Lagerplatz L einen fahrbaren Fachboden F aufweist. Die Produkte P werden beim Einbringen in den Zwischenspeicher Z auf den Fachboden F aufgestellt und das Ebenenbediengerät EBG weist Fachboden-Verfahrmittel auf, mit denen ein Fachboden F aus dem Lagerplatz L in das Ebenenbediengerät EBG und umgekehrt sowie vom Ebenenbediengerät EBG in den Zwischenspeicher Z und umgekehrt transferierbar ist. Hierfür bilden die Fachboden-Verfahrmittel eine in den Figuren nicht näher dargestellte formschlüssige Verbindung mit dem von dem Ebenenbediengerät EBG transportierten Fachboden F. Die Zuordnung je eines Fachbodens F zu je einem Lagerplatz L und die Festlegung, dass der Fachboden die jeweilige Ebene des Lagersystems 1 nicht verlässt und somit nicht auf den zweiten Lifte 14 sowie die Fördertechnik 2 gelangt ergibt den Vorteil, dass keine leeren Fachböden F nach der Entladung in der Kommissionierungseinheit rückgeführt werden müssen und somit die Fördertechnik 2 und den ersten Lift 13 nicht belasten, wodurch ein hoher Durchsatz des Lagersystems 1 gewährleistet ist. Weiters ist kein Zwischenlager für leere Fachböden F nötig, da jeweils ein Fachboden F einem Lagerplatz L des Lagersystems 1 zugeordnet ist und sich dieser Fachboden F entweder auf dem zugeordneten Lagerplatz L oder dem Ebenenbediengerät EBG oder dem Zwischenspeicher Z befindet. Hierauf wird anhand der Figuren 5 noch näher eingegangen.

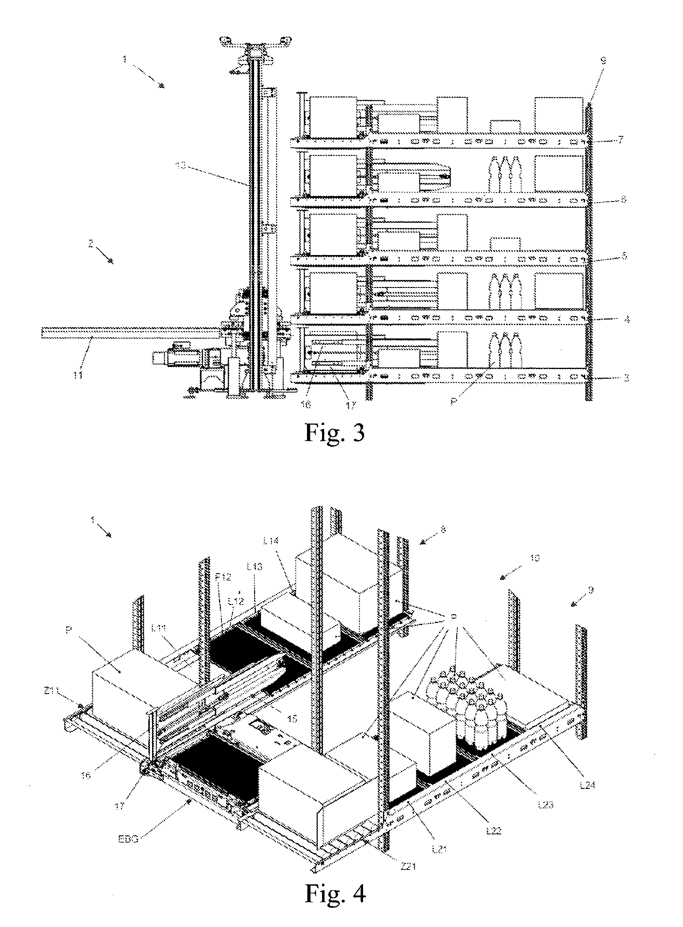

In Figur 4 ist die erste Ebene 3 des ersten Regals 8 und des zweiten Regals 9 samt den dem Ebenenbediengerät EBG der ersten Ebene 3 in einer Schrägansicht dargestellt. Auf den als schwarze Fläche dargestellten Fachböden F der Lagerplätze L21 bis L24 des zweiten Regals 9 und auf den Lagerplätzen L 13 und L 14 des ersten Regals 8 sind Produkte P gelagert. Auf dem Lagerplatz L12 ist nur der zugehörige Fachboden F12 gelagert, weshalb der Lagerplatz L12 frei zur Lagerung eines Produktes P wäre. Auf dem Lagerplatz L11 befindet sind in Figur 4 kein Fachboden F11, da dieser Lagerplatz L11 nicht verwendet wird, worauf nachfolgend noch näher eingegangen ist. Das Ebenenbediengerät EBG ist motorisch angetrieben und fährt durch den Systemrechner gesteuert in der Fahrgasse 10 zum Transport der Fachböden F und der auf den Fachböden F befindlichen Produkten P.

Der zum Auslagern der Produkte P vorgesehene Zwischenpuffer Z11 weist nunmehr eine Produktabschiebeeinrichtung 15 auf, mit der das auf dem Fachboden F befindliche Produkt P mit Schiebern 16 und 17 während des Transports des Fachbodens F von dem Zwischenspeicher Z11 auf das Ebenenbediengerät EBG im Zwischenspeicher Z11 zurückgehalten und somit vom Fachboden F abgestriffen wird. Hierauf transportieren das Ebenenbediengerät EBG den Fachboden F zurück auf den dem Fachboden F zugeordneten Lagerplatz L und das Produkt P wird vom Zwischenspeicher Z11 in den Lift 14 geschoben, sobald dieser bereit ist das Produkt P auf die Exportstrecke 12 zu befördern. Die Produktabschiebeeinrichtung 15 wird ebenfalls vom dem Systemrechner gesteuert und die motorisch oder hydraulisch oder pneumatisch angetriebenen Schieber 16 und 17 stellen eine sehr einfache und kostengünstige und zuverlässige Realisierung dar. Es sei erwähnt, dass das Ebenenbediengerät EBG aber auch eine Fachbodenvibrationseinrichtung oder eine Fachbodenkippeinrichtung oder eine Produktabschiebeeinrichtung aufweisen könnte, wobei je nach Anwendungsfall eine dieser Möglichkeiten vorteilhaft sein kann.

In den Figuren 5-A bis 5-R ist ein Lagersystem 18 gemäß einem weiteren Ausführungsbeispiel der Erfindung in einer schematischen Draufsicht dargestellt, wobei die einzelnen Verfahrensschritte zum Einlagern und zum Auslagern eines Produktes P ersichtlich sind. Das Lagersystem 18 weist Lagerplätze L in sieben Ebenen in einem ersten Regal 19 und einem zweiten Regal 20 auf, wobei in den Figuren 5 die unterste und somit erste Ebene dargestellt ist. Das zweite Regal 20 weist in der ersten Ebene acht Lagerplätze L21, L22 bis L28 auf, wobei stellvertretend für den jeweiligen Lagerplatz L nur der jeweilige Fachboden F21, F22 bis F28 bezeichnet ist. Bei dem ersten Regal sind nur sieben Lagerplätze L12 bis L18 (F 12 bis F18 in Figur 5-A bezeichnet) der acht möglichen Lagerplätze L11 bis L18 zum Lagern von Produkten P vorgesehen, da auf dem Lagerplatz L11 sowie auf den Lagerplätzen in den darüber liegenden Ebenen jeweils die Produktabstreifeinrichtung 21 vorgesehen ist. Produkte P werden über eine Importstrecke 22 einer Fördertechnik 24 an das Lagersystem 18 angeliefert und von einem ersten Lift 23 des Lagersystems 18 zur Einlagerung übernommen und über einen zweiten Lift 25 des Lagersystems 18 und eine Exportstrecke 26 der Fördertechnik 24 wieder abtransportiert. Zwischenpuffer Z11und Z21 sind zum Zwischenspeichern der von dem ersten Lift 23 abgegebenen oder der dem zweiten Lift 25 zuzuführenden Produkten P vorgesehen. Das Ebenenbediengerät EBG dient zum Befördern der Fachböden F samt Produkten P zwischen den Lagerplätzen L und den Zwischenpuffern Z.

Im Folgenden wird nun das Verfahren des Einlagerns eines Produktes P16 von der Fördertechnik 24 in das Lagersystem 18 auf den freien Lagerplatz L16 anhand der Figuren 5-A bis 5-I erläutert. Gemäß dem Beispiel ist angenommen, dass ein Lastkraftwagen zehn Paletten mit je einer Vielzahl von in sechseckigen Schachteln verpackten Produkten in das Palettenlager angeliefert hat, die nun im Lagersystem 18 vereinzelt gelagert werden sollen. In dem Systemrechner ist jedem Lagerplatz L ein Speicherplatz im Computerspeicher zugeordnet, weshalb der Systemrechner weiß, was auf jedem Lagerplatz L des Lagersystems 18 gelagert ist oder ob der Lagerplatz L derzeit frei ist. Der Systemrechner bestimmt somit gemäß manueller Eingabe oder entsprechend einem Computerprogramm, dass eine der sechseckigen Schachteln auf dem gemäß Figur 5-A freien Fachboden F16 des Lagerplatzes L16 gelagert werden sollen und diese sechseckige Schachtel somit den Codenamen Produkt P16 erhält. In Figur 5-B wird das Produkt P16 über die Importstrecke 22 angeliefert und in Figur 5-C an den ersten Lift 23 übergeben. Da das Produkt P16 in der ersten Ebene des ersten Regals 19 eingelagert werden soll ist es nicht nötig, dass der erste Lift 23 das Produkt P16 in eine andere Ebene hebt, weshalb das Produkt P16 gemäß Figur 5-D in den Zwischenpuffer Z21 verschiebt. Hierdurch ist vorteilhafterweise erreicht, dass der erste Lift 23 bereits ein weiteres über die Importstrecke 22 angeliefertes Produkt P übernehmen und in beispielsweise die zweite Ebene und den dortigen Zwischenpuffer Z22 befördern kann während noch das Ebenenbediengerät EBG der ersten Ebene das Produkt P16 auf den Lagerplatz L16 befördern. Hierdurch wird der Durchsatz des Lagersystems 18 wesentlich erhöht.

Wie in Figur 5-E dargestellt fährt nun das Ebenenbediengerät EBG gesteuert durch den Systemrechner zu dem Lagerplatz L16 und holt den leeren Fachboden F16 ab. In Figur 5-F schieben das Ebenenbediengerät EBG den Fachboden F16 unter das Produkt P16, worauf nachfolgend noch näher eingegangen wird. Gemäß Figur 5-G zieht das Ebenenbediengerät EBG den Fachboden F16 mittels der formschlüssigen Verbindung auf das Ebenenbediengerät EBG und transportiert den Fachboden F16 zu dem Lagerplatz L16, wie diese in Figur 5-H dargestellt ist. In Figur 5-I schiebt das Ebenenbediengerät EBG den Fachboden F16 mittels der formschlüssigen Verbindung in den Lagerplatz L16, wodurch der Einlagerungsvorgang des Produkts P16 beendet ist.

Gemäß dem Ausführungsbeispiel ist nunmehr angenommen, dass der Systemrechner eine Bestellung abarbeitet und die hierfür nötigen Produkte - unter Anderem das Produkt P28 - kommissioniert. Der Systemrechner steuert in Folge das Auslagern des Produktes P28 aus dem Lagersystem 18 auf die Fördertechnik 24, mit der das Produkt P28 an die Kommissionierungseinheit befördert werden soll. In den Figuren 5-J bis 5-R ist das Verfahren zum Auslagern eines Produktes P28 beschrieben.

Wie in Figur 5-J dargestellt, fährt das Ebenenbediengerät EBG zu dem Lagerplatz L28, um gemäß Figur 5-K den Fachboden F28 samt Produkt P28 auf das Ebenenbediengerät EBG zu ziehen. In Figur 5-L befördert das Ebenenbediengerät EBG den Fachboden F28 zum für das Auslagern vorgesehenen Zwischenpuffer Z11 und schieben, wie in Figur 5-M dargestellt, den Fachboden F28 samt dem Produkt P28 in den Zwischenpuffer Z11. Wie in Figur 5-N dargestellt, fährt hierauf vom Systemrechner gesteuert ein Schieber 27 der Produktabstreifeinrichtung 21 aus und streift, wie in Figur 5-O dargestellt, während der Fachboden F28 auf das Ebenenbediengerät EBG zurückgezogen wird das Produkt P28 von dem Fachboden F28 ab. Wie in Figur 5-P dargestellt befindet sich hierauf das Produkt P28 auf den Transportrollen TR des Zwischenpuffers Z11 und der Fachboden F28 auf dem Ebenenbediengerät EBG. Wie in Figur 5-Q dargestellt, befördert hierauf das Ebenenbediengerät EBG den Fachboden F28 zurück zu dem Lagerplatz L28. Sobald der zweite Lift 25 frei und bereit zum Befördern des Produktes P28 ist, wird das Produkt P28 über die Transportrollen des Zwischenpuffers Z11 auf die Transportrollen des zweiten Lifts 25 und von diesen auf die Transportrollen TR der Exportstrecke 26 der Fördertechnik 24 befördert. Gemäß Figur 5-R ist somit das Auslagern des Produktes P28 aus dem Lagersystem 18 abgeschlossen.

Wie anhand des Ausführungsbeispiels gemäß den Figuren 5 ersichtlich, verlassen die Fachböden F des Lagersystems 18 zu keinem Zeitpunkt des Einlagerns oder des Auslagerns die jeweilige Ebene des Lagersystems 18 und belasten somit vorteilhafterweise nicht die Förderkapazität der Lifte 23 und 25. Durch die nur "lokale" Verwendung der Fachböden F in dem Lagersystem 1 und die übergeordnete Steuerung des Systemrechners ist es nicht nötig, dass die Fachböden F eine spezielle Identifikation wie beispielsweise einen Barcode oder einen so genannten Radio Frequency Identification Tag aufweisen müssen. Die Fachböden F sind als identifikationslose Fachböden F ausgeführt, die somit sehr kostengünstig herstellbar sind. Durch das Vorsehen des ersten und das zweiten Lifts 23 und 25 und mehreren Regalebenen ist der Vorteil erhalten, dass die Regale Produkte P in mehreren Ebene lagern können, wodurch die Grundfläche des Lagersystems 18 gering gehalten werden kann. Durch die Zuordnung, dass die Importstrecke 22 und der erste Lift 23 und der Zwischenpuffer Z21 ausschließlich zum Einlagern von Produkten P und, dass der Zwischenpuffer Z11 und der zweite Lift 25 und die Exportstrecke 26 ausschließlich zum Auslagern von Produkten P verwendet werden, können Kollisionen und Überschneidungen vermieden werden, weshalb eine besonders effektive Arbeitsweise des Lagersystems 18 gegeben ist. Durch das Vorsehen der Transportrollen TP nicht nur auf der Fördertechnik 24 sondern auch in den Liften 23 und 25 sowie den Zwischenpuffern Z11 und Z21 ist der Vorteil eines besonders leichten und energiesparenden Transports der Fachböden F gegeben. Die vorstehend im Bezug auf das Lagersystem 18 angegebene Vorteile gelten sinngemäß auch für das Lagersystem 1. Es sei erwähnt, dass die einzelnen Schritte des Einlagerns und des Auslagerns in Figur 5 zur einfacheren Erläuterung rein sequentiell dargestellt wurden und dass einzelne dieser Schritte bei einer tatsächlichen Realisierung parallel abgearbeitet werden können, um den Durchsatz des Lagersystems weiter zu erhöhen. Weiters kann erwähnt werden, dass nicht jeder Lagerplatz L mit einem Fachboden F bestückt sein muss. So könnte beispielsweise das Ebenenbediengerät EBG den leeren Fachboden F nicht wieder an seinen ursprünglichen Platz am, vom Zwischenpuffer Z aus gesehen, anderen Ende des Regals zurück transportieren, sondern den leeren Fachboden F in einen näher gelegenen Lagerplatz L ohne Fachboden F einlagern. Hierdurch kann bei einem Lagersystem, das nicht voll ausgelastet ist, die Effizienz der Ebenenbediengeräte EBG gesteigert werden.

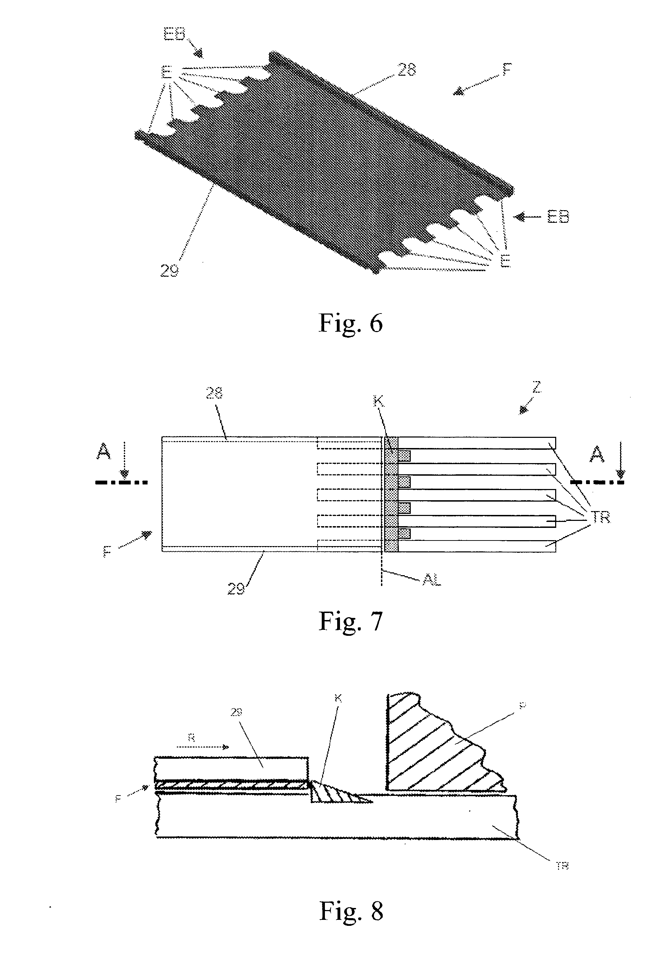

In Figur 6 ist ein sowohl in dem Lagersystem 1 als auch in dem Lagersystem 18 einsetzbarer Fachboden F dargestellt. Der Fachboden F weist an seinen Längsseiten je eine kleine Wand 28 und 29 auf, um ein Herunterfallen oder Heruntergleiten eines Produktes P zu erschweren. An seinen Schmalseiten weist der Fachboden F je halbkreisförmige Einbuchtungen EB auf, deren Durchmesser etwas größer als der Durchmesser der Transportrollen TR des Lagersystems und der Fördertechnik gewählt ist. Die Enden E der Einbuchtungen EB sind nach unten geneigt und bilden abgeschrägte Ladekanten Fortsätze. Wenn der Fachboden F auf den Transportrollen TR zu liegen kommt, dann greifen die Enden E in die Zwischenräume der Transportrollen TR ein, wodurch die Enden E beim Aufschieben eines im Zwischenpuffer Z befindlichen Produktes P unter das Produkt P fahren. Hierdurch ist der Vorteil erhalten, dass der Fachboden F mit geringem Kraftaufwand und ohne die Gefahr eines Verspießens oder Blockierens unter das Produkt P geschoben werden kann. Bei dem in Figur 6 dargestellten Fachboden F sind die Einbuchtungen EB an beiden Schmalseiten des Fachbodens F vorgesehen, was den Vorteil hat, dass der Fachboden F symmetrisch ist und nicht um 180 Grad verdreht auf dem Lagerplatz oder dem Ebenenbediengerät EBG zu liegen kommen kann. In einer besonders kostengünstige Variante könnte aber auch nur eine Schmalseite, nämlich die den Lagerplätzen L und dem Zwischenpuffer Z zugewandte Schmalseite mit Einbuchtungen EB ausgestattet sein.

In Figur 7 ist ein Fachboden F gemäß einem anderen Ausführungsbeispiel samt Transportrollen TR eines Zwischenpuffers Z und ein Keil K in einer Draufsicht dargestellt, wobei der Fachboden F samt Keil K bereits teilweise in den Zwischenpuffer Z geschoben dargestellt ist. Der Fachboden F gemäß Figur 7 weist, wie der Fachboden F gemäß Figur 6, kleine Wände 28 und 29 an der Längsseite auf, wobei jedoch keine Einbuchtungen EB vorgesehen sind. Der Zwischenpuffer Z weist regalseitig den Keil K auf, an den der Fachboden F andockt und gemeinsam mit dem Fachboden F in den Zwischenpuffer Z und zurück fahren kann. Der Keil K weist eine von der Andocklinie AL mit dem Fachboden F ausgehend nach unten abgeschrägte Oberseite auf, die sich beim Einschieben des Fachbodens F durch das Ebenenbediengerät EBG in den Zwischenpuffer Z unter ein Produkt P schiebt und somit das Produkt P auf den Fachboden F leicht anhebt.

Figur 8 zeigt eine Schnittdarstellung des Fachbodens F samt Keil K und Transportrollen TR entlang einer Schnittlinie A-A, wobei auch ein in dem Zwischenpuffer Z liegendes Produkt P geschnitten dargestellt ist. Wie anhand von Figur 8 deutlich zu erkennen schieben sich die Keil Fortsätze des Keils K zwischen den Transportrollen TR unter das Produkt P, wenn das Ebenenbediengerät EBG den Fachboden F in Richtung des Pfeils R schiebt. Beim Zurückziehen des Fachbodens F wird der Keil K wieder in die Ausgangslage zurück gezogen. Hierdurch ist der Vorteil erhalten, dass der Fachboden F an der Schmalseite keine Einbuchtungen EB benötigt und somit wesentlich kostengünstiger herstellbar ist.

Es kann erwähnt werden, dass bei einem Lagersystem auch Fördertechnik an beiden Seiten der Regale angeordnet sein könnte. In diesem Fall wären Lifte und Förderbänder an jeder der Schmalseiten der Regale angeordnet und der jeweils letzte Lagerplatz L eines jeden Regals wären somit als Zwischenpuffer ausgebildet. Hierdurch könnte ein noch größerer Durchsatz durch das Lagersystem erreicht werden.

Es kann erwähnt werden, dass die Fachböden aus unterschiedlichen Materialen hergestellt sein können. Die Anzahl der Regale und die Anzahl an Lagerplätzen in den einzelnen Regalen kann in dem erfindungsgemäßen Lagersystem beliebig gewählt und erweitert werden.

## Patentansprüche

1. Lagersystem (1; 18) mit zumindest zwei übereinander angeordneten Regalebenen (3, 4, 5, 6, 7), mit zumindest einer Fahrgasse (10), mit entlang der Fahrgasse (10) befindlichen Regalen (8, 9; 19, 20) mit Lagerplätzen (L) für Produkte (P), wobei je Regalebene ein in der Fahrgasse (10) horizontal verfahrbares Ebenenbediengerät (EBG) zum Anfahren der Lagerplätze (L) der Regalebene vorhanden ist sowie, mit einer Fördertechnik (2; 24) zum Zuführen und Wegführen von Produkten (P) zur bzw. von der Regalebene (3, 4, 5, 6, 7) und mit zumindest einem Zwischenpuffer (Z) je Regalebene, in dem von der Fördertechnik (2; 24) zugeführte Produkte (P) bis zur Einlagerung in einem Lagerplatz (L) der Regalebene zwischengespeichert werden und in dem aus Lagerplätzen (L) der Regalebene ausgelagerte Produkte (P) bis zu ihrer Übergabe auf die Fördertechnik (2; 24) zwischengespeichert werden, wobei im Wesentlichen jeder Lagerplatz (L) einen verfahrbaren Fachboden (F) aufweist und das Ebenenbediengerät (EBG) Fachboden-Verfahrmittel aufweist, mit denen ein Fachboden (F) aus dem Lagerplatz (L) in das Ebenenbediengerät (EBG) und umgekehrt sowie vom Ebenenbediengerät (EBG) in den Zwischenpuffer (Z) und umgekehrt transferierbar ist, und dass eine Produktabstreifeinrichtung (15, 21) am Zwischenpuffer (Z) je Regalebene vorgesehen ist, sodass der Fachboden (F) in der jeweiligen Regalebene (3, 4, 5, 6, 7) bleibt und nicht auf die Fördertechnik (2; 24) gelangt.

2. Lagersystem (1; 18) nach Anspruch 1, **dadurch gekennzeichnet, dass** Zwischenpuffer (Z) an gegenüberliegenden Seiten der Fahrgasse (10) und/oder an entgegengesetzten Endbereichen der Fahrgasse (10) angeordnet sind, wobei vorzugsweise zumindest ein Zwischenpuffer (Z) nur zum Auslagern und zumindest ein anderer Zwischenpuffer (Z) nur zum Einlagern der Produkte (P) vorgesehen ist.

3. Lagersystem (1; 18) nach Anspruch 1 oder 2, **dadurch gekennzeichnet, dass** die Fachböden (F) an ihren den Lagerplätzen (L) und den Zwischenpuffern (P) zugewandten Seiten mit nach unten geneigten oder abgeschrägten Ladekanten (E) versehen sind.

4. Lagersystem (1; 18) nach Anspruch 3, **dadurch gekennzeichnet, dass** die Ladekanten (E) Fortsätze aufweisen, die zwischen Transportelemente, insbesondere Transportrollen (TR), des Zwischenpuffers (Z) einführbar sind.

5. Lagersystem (1; 18) nach Anspruch 1 oder 2, **dadurch gekennzeichnet, dass** am zumindest einen Zwischenpuffer (Z) regalgassenseitig ein Keil (K) angeordnet ist, an dem ein Fachboden (F) andockbar ist und der gemeinsam mit dem Fachboden (F) in den Zwischenpuffer (Z) und zurück verfahrbar ist, wobei der Keil (K) von der Andocklinie (AL) mit dem Fachboden (F) ausgehend eine nach unten abgeschrägte Oberseite aufweist.

6. Lagersystem (1; 18) nach Anspruch 5, **dadurch gekennzeichnet, dass** der Keil (K) Fortsätze aufweist, die zwischen Transportelemente, insbesondere Transportrollen (TR), des Zwischenpuffers (Z) einführbar sind.

7. Lagersystem (1; 18) nach einem der vorhergehenden Ansprüche, **dadurch gekennzeichnet, dass** zumindest der Zwischenpuffer (Z), insbesondere der zum Auslagern der Produkte (P) vorgesehene Zwischenpuffer (Z), als Produktabstreifeinrichtung (15; 21) beispielsweise einen Rückhalter oder Schieber 16, 17; 27) aufweist.

8. Lagersystem (1; 18) nach einem der vorhergehenden Ansprüche, **dadurch gekennzeichnet, dass** das Ebenenbediengerät (EBG) eine Fachbodenvibrationseinrichtung, -kippeinrichtung oder eine Produktabschiebeeinrichtung aufweist.

9. Lagersystem (1; 18) nach einem der vorhergehenden Ansprüche, **gekennzeichnet durch** mehrere Regalebenen (3, 4, 5, 6, 7).

10. Lagersystem (1; 18) nach Anspruch 9, **dadurch gekennzeichnet, dass** die Fördertechnik (2; 24) zumindest einen Lift (13, 14; 23, 25) zum Zuführen und Wegführen von Produkten (P) zu den bzw. von den Regalebenen (3, 4, 5, 6, 7) umfasst, wobei optional Lifte an den entgegensetzten Enden der Fahrgasse (10) angeordnet sind.

11. Lagersystem (1; 18) nach Anspruch 10, **dadurch gekennzeichnet, dass** zumindest ein Lift (13; 23) zum Zuführen von Produkten (P) zu den Regalebenen (3, 4, 5, 6, 7) und zumindest ein Lift (14; 25) zum Wegführen von Produkten (P) von den Regalebenen (3, 4, 5, 6, 7) vorgesehen ist.

12. Lagersystem (1; 18) nach einem der Ansprüche 10 oder 11, **dadurch gekennzeichnet, dass** der zumindest eine Zwischenpuffer (Z) und/oder gegebenenfalls der zumindest eine Lift (13, 14; 23, 25) Transportelemente, insbesondere Transportrollen (TR), aufweist.

13. Lagersystem (1; 18) nach einem der vorhergehenden Ansprüche, **dadurch gekennzeichnet, dass** die Fachböden (F) als identifikationslose Fachböden (F) ausgebildet sind.

14. Verfahren zum Einlagern und Auslagern von Produkten (P) in ein bzw. aus einem Lagersystem (1; 18) mit zumindest zwei übereinander angeordneten Regalebenen (3, 4, 5, 6, 7), mit zumindest einer Fahrgasse (10), mit entlang der Fahrgasse (10) befindliche Regale (8, 9; 19, 20) mit Lagerplätzen (L) für Produkte (P), wobei je Regalebene ein in der Fahrgasse (10) horizontal verfahrbares Ebenenbediengerät (EBG) zum Anfahren der Lagerplätze (L) der Regalebene vorhanden ist, wobei die Produkte (P) mittels einer Fördertechnik (2; 24) zur Regalebene (3, 4, 5, 6, 7) hin bzw. von der Regalebene (3, 4, 5, 6, 7) weg geführt werden, wobei von der Fördertechnik (2; 24) zugeführte Produkte (P) bis zu ihrer Einlagerung in einem Lagerplatz (L) in einem Zwischenpuffer (Z) je Regalebene zwischengespeichert werden und aus Lagerplätzen (L) ausgelagerte Produkte (P) bis zu ihrer Übergabe auf die Fördertechnik (2; 24) in einem Zwischenpuffer (Z) je Regalebene zwischengespeichert werden, wobei im Wesentlichen jeder Lagerplatz (L) einen verfahrbaren Fachboden (F) aufweist, wobei Produkte (P) aus Lagerplätzen (L) ausgelagert werden, indem der Fachboden (F) des jeweiligen Lagerplatzes (L) zusammen mit dem darauf gelagerten Produkt (P) in das Ebenenbediengerät (EBG) transferiert, das Ebenenbediengerät (EBG) zu einem Zwischenpuffer (Z) der Regalebene fährt, das Produkt (P) vom Fachboden (F) in den Zwischenpuffer (Z) der Regalebene übergeben wird, von dem Fachboden (F) abgestriffen wird und der leere Fachboden (F) wieder in einen keinen Fachboden (F) enthaltenden Lagerplatz (L) der Regalebene transferiert wird, wobei ein in einem Zwischenpuffer (Z) einer Regalebene befindliches Produkt (P) in einen leeren Lagerplatz (L) der Regalebene eingelagert wird, indem das Ebenenbediengerät (EBG) diesen Lagerplatz (L) anfährt, der leere Fachboden (F) in das Ebenenbediengerät (EBG) transferiert wird, das Ebenenbediengerät (EBG) zum Zwischenpuffer (Z) der Regalebene fährt und das Produkt (P) vom Zwischenpuffer (Z) auf den Fachboden (F) übergeben wird, worauf das Ebenenbediengerät (EBG) den Lagerplatz (L) anfährt und der Fachboden (F) samt dem Produkt (P) in den Lagerplatz (L) transferiert wird.

15. Verfahren nach Anspruch 14, **dadurch gekennzeichnet, dass** die Steuerung des Einlagerns und Auslagerns von Produkten (P) produktbezogen unter Verwendung von identifikationslosen Fachböden (F) erfolgt.

## Claims

1. A storage system (1; 18) with at least two shelving levels (3, 4, 5, 6, 7) arranged above each other, comprising at least one transport aisle (10), shelves (8, 9; 19, 20) situated alongside the transport aisle (10) with storage spaces (L) for products (P), wherein a level transport device (EBG) movable horizontal in the transport aisle (10) for approaching the storage spaces (L) of the shelving level is arranged in each transport aisle (10), with a conveyor system (2; 24) for delivering products (P) to the shelving level (3, 4, 5, 6, 7) and removing products therefrom, with at least one intermediate buffer (Z) in each shelving level, in which the products (P) supplied by means of the conveyor system (2; 24) are temporarily stored until their storage in a storage space (L) of the shelving level and in which products (P) that are removed from the storage places (L) of the shelving level are temporarily stored until their transfer to the conveyor system (2; 24), wherein substantially each storage space (L) comprises a movable compartment floor (F) and that the level transport device (EBG) comprises compartment floor-moving means, by means of which a compartment floor (F) may be transferred from the storage space (L) into the level transport device (EBG) and vice versa and from the level transport device (EBG) into the intermediate buffer (Z) and vice versa and that a product stripping device (15; 21) is arranged on each intermediate buffer (Z) of each shelving level so that the compartment floor (F) stays in each shelving level and does not pass onto the conveyor system (2; 24).

2. A storage system (1; 18) according to claim 1, **characterized in that** there are arranged intermediate buffers (Z) at opposite sides of the transport aisle (10) and/or at opposite end regions of the transport aisle (10), wherein preferably at least one intermediate buffer (Z) is provided only for removing the products (P) and at least another intermediate buffer (Z) only for storing the products (P).

3. A storage system (1; 18) according to claim 1 or 2, **characterized in that** the compartment floors (F) are provided at the sides facing the storage places (L) and the intermediate buffers (P) with loading edges (E) inclined downwards or chamfered.

4. A storage system (1; 18) according to claim 3, **characterized in that** the loading edges (E) have appendices that may be introduced between the transport elements, in particular transport rolls (TR), of the intermediate buffer (Z).

5. A storage system (1; 18) according to claim 1 or 2, **characterized in that** there is arranged a wedge (K) at the at least one intermediate buffer (Z) on the side of the shelf aisle, to which there may be docked a compartment floor (F) and which may be transferred together with the compartment floor (F) into the intermediate buffer (Z) and back, wherein the wedge (K) has an upper surface that is chamfered downwards starting from the docking line (AL) with the compartment floor (F).

6. A storage system (1; 18) according to claim 5, **characterized in that** the wedge (K) has appendices that may be introduced between transport elements, in particular transport rolls (TR), of the intermediate buffer (Z).

7. A storage system (1; 18) according to any of the preceding claims, **characterized in that** at least the intermediate buffer (Z), in particular the intermediate buffer provided for removing the products (P), has the product stripping device (15; 21), for example, a retainer or a slide element (16, 17; 27).

8. A storage system (1; 18) according to any of the preceding claims, **characterized in that** the level transport device (EBG) has a compartment floor vibration device, a compartment floor inclination device or a product discharge device.

9. A storage system (1; 18) according to any of the preceding claims, **characterized by** several shelving levels (3, 4, 5, 6, 7).

10. A storage system (1; 18) according to claim 9, **characterized in that** the conveyor system (2; 24) comprises at least one lift (13, 14; 23, 25) for supplying products (P) to the shelving levels (3, 4, 5, 6, 7) and removing therefrom, wherein there are optionally arranged lifts at the opposite ends of the transport aisle (10).

11. A storage system (1; 18) according to claim 10, **characterized in that** there is provided at least one lift (13; 23) for supplying products (P) to the shelving levels (3, 4, 5, 6, 7) and at least one lift (14; 25) for removing the products (P) from the shelving levels (3, 4, 5, 6, 7).

12. A storage system (1; 18) according to any of the preceding claims, **characterized in that** the at least one intermediate buffer (Z) and/or optionally the at least one lift (13, 14; 23, 25) have transport elements, in particular transport rolls (TR).

13. A storage system (1; 18) according to any of the preceding claims, **characterized in that** the compartment floors (F) are formed as identification-less compartment floors (F).

14. A method for storing products (P) in or removing these from a storage system (1; 18) with at least two shelving levels (3, 4, 5, 6, 7) arranged above each other, comprising the at least one transport aisle (10), shelves (8, 9; 19, 20) situated alongside the transport aisle (10) with storage spaces (L) for products (P), wherein a level transport device (EBG) movable horizontal in the transport aisle (10) for approaching the storage spaces (L) of the shelving level arranged in each transport aisle (10), wherein the products (P) are supplied by means of a conveyor system (2; 24) to the shelving level (3, 4, 5, 6, 7) and removed therefrom, wherein the products (P) supplied by means of the conveyor system (2; 24) are temporarily stored in an intermediate buffer (Z) in each shelving level until their storage in a storage space (L) of the shelving level and in which products (P) that are removed from the storage places (L) are temporarily stored in an intermediate buffer (Z) until their transfer to the conveyor system (2; 24), wherein substantially each storage space (L) has a movable compartment floor (F), wherein products (P) are removed from the storage spaces (L) by the compartment floor (F) of the respective storage space (L) being transferred together with the product (P) stored thereupon into the level transport device (EBG), the level transport device (EBG) moving to an intermediate buffer (Z) of the shelving level, the product (P) being transferred and wipped off from the compartment floor (F) into the intermediate buffer (Z) of the shelving level and the empty compartment floor (F) being again transferred into a storage space (L) of the shelving level containing no compartment floor (F), wherein a product (P) being situated in an intermediate buffer (Z) of the shelving level is placed into storage into an empty storage space (L) of the shelving level, by the level transport device (EBG) approaching this storage space (L), by the empty compartment floor (F) being transferred into the level transport device (EBG), by the level transport device (EBG) moving to the intermediate buffer (Z) of the shelving level and the product (P) being transferred from the intermediate buffer (Z) to the compartment floor (F), whereupon the level transport device (EBG) approaches the storage space (L) and the compartment floor (F) including the product (P) is transferred into the storage space (L).

15. A method according to claim 14, **characterized in that** the control for storing and removing the products (P) is carried out dependent on the products (P) using identification-less compartment floors (F).

## Revendications

1. Système d'entreposage (1 ; 18) comprenant au moins deux plans de rayonnages agencés les uns au-dessus des autres (3, 4, 5, 6, 7), comprenant au moins une voie de circulation (10) et comprenant des rayonnages (8, 9 ; 19, 20) situés le long de la voie de circulation (10) et comportant des emplacements de stockage (L) pour des produits (P), dans lequel il est prévu pour chaque plan de rayonnage un appareil de desserte de plan (EBG) déplaçable horizontalement dans la voie de circulation (10) pour l'approche des emplacements de stockage (L) du plan de rayonnage, ainsi qu'une unité technique de convoyage (2 ; 24) pour amener et éloigner des produits (P) vers et depuis le plan de rayonnage (3, 4, 5, 6, 7), et comprenant au moins un tampon intermédiaire (Z) pour chaque plan de rayonnage, dans lequel des produits (P) amenés par l'unité technique de convoyage (2 ; 24) sont entreposés de manière intermédiaire jusqu'à leur mise en stockage dans un emplacement de stockage (L) du plan de rayonnage, et dans lequel des produits (P) sortis des emplacements de stockage (L) du plan de rayonnage sont entreposés de manière intermédiaire jusqu'à leur transfert à l'unité technique de convoyage (2 ; 24), dans lequel chaque emplacement de stockage (N) comprend essentiellement un plancher de case (F) déplaçable, et l'appareil de desserte de plan (EBG) comprend des moyens de déplacement pour plancher de case au moyen desquels un plancher de case (R) est susceptible d'être transféré depuis l'emplacement de stockage (L) vers l'appareil de desserte de plan (EBG) et inversement, ainsi qu'il est susceptible d'être transféré depuis l'appareil de desserte de plan (EBG) vers le tampon intermédiaire (Z) et inversement, et dans lequel il est prévu pour chaque plan de rayonnage un dispositif de raclage de produit (15, 21) sur le tampon intermédiaire (Z), de sorte que le plancher de case (F) reste dans le plan de rayonnage (3, 4, 5, 6, 7) respectif et ne parvient pas sur l'unité technique de convoyage (2 ; 24).

2. Système d'entreposage (1 ; 18) selon la revendication 1, **caractérisé en ce que** des tampons intermédiaires (Z) sont agencés sur des côtés opposés de la voie de circulation (10) et/ou dans des zones terminales opposées de la voie de circulation (10), et dans lequel de préférence au moins un tampon intermédiaire (Z) est prévu uniquement pour la sortie et au moins un autre tampon intermédiaire (Z) est prévu uniquement pour l'entrée des produits (P).

3. Système d'entreposage (1 ; 18) selon la revendication 1 ou 2, **caractérisé en ce que** les planchers de case (R) sont pourvus d'arêtes de chargement (E) inclinées vers le bas ou chanfreinées au niveau de leur côté tourné vers les emplacements de stockage (L) et vers les tampons intermédiaires (P).

4. Système d'entreposage (1 ; 18) selon la revendication 3, **caractérisé en ce que** les arêtes de chargement (E) comportent des prolongements qui sont susceptibles d'être introduits entre des éléments de transport, en particulier des rouleaux de transport (TR), du tampon intermédiaire (Z).

5. Système d'entreposage (1 ; 18) selon la revendication 1 ou 2, **caractérisé en ce qu'**un coin (K) est agencé sur au moins un tampon intermédiaire (Z) du côté de la voie de circulation, coin vers lequel un plancher de case (R) est susceptible d'être accosté et qui est susceptible d'être déplacé conjointement avec le plancher de case (F) jusque dans le tampon intermédiaire (Z) et en retour, et dans lequel le coin (K) comporte, en partant de la ligne d'accostage (AN) avec le plancher de case (R), une face supérieure en biais vers le bas.

6. Système d'entreposage (1 ; 18) selon la revendication 5, **caractérisé en ce que** le coin (K) comporte des prolongements qui sont susceptibles d'être introduits entre des éléments de transport, en particulier des rouleaux de transport (TR) du tampon intermédiaire (Z).

7. Système d'entreposage (1 ; 18) selon l'une des revendications précédentes, **caractérisé en ce qu'**au moins le tampon intermédiaire (Z), en particulier le tampon intermédiaire (Z) prévu pour la sortie des produits (P), comprend à titre de dispositif de raclage de produits (15 ; 21) par exemple un élément de retenue ou un coulisseau (16, 17 ; 27).

8. Système d'entreposage (1 ; 18) selon l'une des revendications précédentes, **caractérisé en ce que** l'appareil de desserte de plan (EBG) comprend un dispositif de vibration de plancher, un dispositif de basculement de plancher ou un dispositif de déplacement de produit.

9. Système d'entreposage (1 ; 18) selon l'une des revendications précédentes, **caractérisé par** plusieurs plans de rayonnages (3, 4, 5, 6, 7).

10. Système d'entreposage (1 ; 18) selon la revendication 9, **caractérisé en ce que** l'unité technique de convoyage (2 ; 24) comprend au moins un élévateur (13, 14 ; 23, 25) pour amener et éloigner des produits (P) vers ou depuis les plans de rayonnages (3, 4, 5, 6, 7), et dans lequel des élévateurs sont agencés en option aux extrémités opposées de la voie de circulation (10).

11. Système d'entreposage (1 ; 18) selon la revendication 10, **caractérisé en ce qu'**il est prévu au moins un élévateur (13 ; 23) pour l'amenée de produit (P) vers les plans de rayonnage (3, 4, 5, 6, 7), et au moins un élévateur (14 ; 25) pour l'éloignement de produits (P) depuis les plans de rayonnage (3, 4, 5, 6, 7).

12. Système d'entreposage (1 ; 18) selon l'une des revendications 10 ou 11, **caractérisé en ce que** ledit au moins un tampon intermédiaire (Z) et/ou le cas échéant ledit au moins un élévateur (13, 14 ; 23, 25) comprend des éléments de transport, en particulier des rouleaux de transport (TR).

13. Système d'entreposage (1 ; 18) selon l'une des revendications précédentes, **caractérisé en ce que** les planchers de case (R) sont réalisés sous forme de planchers de case (F) dépourvus d'identification.

14. Procédé pour l'entrée et la sortie de produits (P) dans un système d'entreposage (1 ; 18) ou hors de celui-ci, comprenant au moins deux plans de rayonnages (3, 4, 5, 6, 7) agencés les uns au-dessus des autres, comprenant au moins une voie de circulation (10) et comprenant des rayonnages (8, 9 ; 19, 20) situés le long de la voie de circulation (10) et comportant des emplacements de stockage (L) pour des produits (P), dans lequel il est prévu pour chaque plan de rayonnage un appareil de desserte de plan (EBG) déplaçable horizontalement dans la voie de circulation (10) pour l'approche des emplacements de stockage (L) du plan de rayonnage, dans lequel les produits (P) sont amenés au plan de rayonnage (3, 4, 5, 6, 7) ou éloignés du plan de rayonnage (3, 4, 5, 6, 7) au moyen d'une unité technique de convoyage (2 ; 24), dans lequel des produits (P) amenés par l'unité technique de convoyage (2 ; 24) sont stockés de manière intermédiaire, jusqu'à leur entreposage dans un emplacement de stockage (L), dans un tampon intermédiaire (Z) pour chaque plan de rayonnage, et des produits (P) sortis des emplacements de stockage (L) sont stockés de manière intermédiaire, jusqu'à leur transmission à l'unité technique de convoyage (2 ; 24), dans un tampon intermédiaire (Z) pour chaque plan de rayonnage, dans lequel essentiellement chaque emplacement de stockage (L) comprend un plancher de case déplaçable (F), dans lequel des produits (P) sont sortis des emplacements de stockage (L) en transférant le plancher de case (F) de l'emplacement de stockage respectif (S) conjointement avec le produit stocké sur celui-ci (P) vers l'appareil de desserte de plan (EBG), l'appareil de desserte de plan (EBG) est déplacé vers un tampon intermédiaire (Z) du plan de rayonnage, le produit (P) est transféré du plancher de case (S) vers le tampon intermédiaire (Z) du plan de rayonnage, est raclé en éloignement du plancher de case (S) et le plancher de case vide (S) est à nouveau transféré dans un emplacement de stockage (L), du plan de rayonnage, qui ne contient aucun plancher de case (S), dans lequel un produit (P) qui se trouve dans un tampon intermédiaire (Z) d'un plan de rayonnage est entré dans un emplacement de stockage (L) vide du plan de rayonnage, en approchant l'appareil de desserte de plan (EBG) vers cet emplacement de stockage (L), le plancher de case vide (S) est transféré vers l'appareil de desserte de plan (EBG), l'appareil de desserte de plan (EBG) est déplacé vers le tampon intermédiaire (Z) du plan de rayonnage, et le produit (P) est transféré du tampon intermédiaire (Z) vers le plancher de case (S), suite à quoi l'appareil de desserte de plan (EBG) est déplacé vers l'emplacement de stockage (L), et le plancher de case (S) est transféré conjointement avec le produit (P) vers l'emplacement de stockage (L).

15. Procédé selon la revendication 14, **caractérisé en ce que** la commande de l'entrée et de la sortie et de produits (P) a lieu d'une manière accordée aux produits en utilisant des planchers de case (F) dépourvus d'identification.
